# EUROPÄISCHE PATENTSCHRIFT

(11) **EP 1 907 254 B1**
(45) Veröffentlichungstag und Bekanntmachung des Hinweises auf die Patenterteilung: **09.06.2010**
(21) Anmeldenummer: 06754723.2
(22) Anmeldetag: 14.07.2006
(51) Int. Cl.: B60T 17/00, B01D 53/04

(54) **VERFAHREN ZUR LUFTAUFBEREITUNG UND LUFTAUFBEREITUNGSANLAGE**
METHOD FOR THE TREATMENT OF AIR AND AIR TREATMENT SYSTEM
PROCEDE DE TRAITEMENT PNEUMATIQUE ET INSTALLATION DE TRAITEMENT PNEUMATIQUE

(30) Priorität: 15.07.2005 DE 102005033083
(43) Veröffentlichungstag der Anmeldung: 09.04.2008
(73) Patentinhaber: KNORR-BREMSE Systeme für Nutzfahrzeuge GmbH, 80809 München (DE)
(72) Erfinder: HILBERER, Eduard, 68766 Hockenheim (DE)
(74) Vertreter: Schönmann, Kurt
(86) Internationale Anmeldenummer: PCT/EP2006/006902
(87) Internationale Veröffentlichungsnummer: WO 2007/009668

(56) Entgegenhaltungen:
- DE-A1- 3 445 699
- DE-A1- 19 911 741
- US-A- 5 103 576
- US-A- 5 257 008

## Beschreibung

Die Erfindung betrifft ein Verfahren zur Luftaufbereitung, insbesondere für pneumatische Bremsanlagen von Nutzfahrzeugen, mit den Schritten: Fördern von Druckluft zu einem Druckluftvorratsbehälter durch einen Lufttrockner, Einleiten einer Regeneration des Lufttrockners, indem Regenerationsluft aus dem Druckluftvorratsbehälter durch den Lufttrockner geleitet und von dort über ein Ablassventil abgelassen wird, und Berechnen der theoretisch erforderlichen Regenerationsluftmenge Q_{Reg,th}.

Die Erfindung betrifft weiterhin eine Luftaufbereitungsanlage für pneumatische Bremsanlagen von Nutzfahrzeugen, mit einer Druckluftquelle, einem Lufttrockner, einem Druckluftbehälter, einem Ablassventil und einem Regenerationsventil.

Luftaufbereitungsanlagen der gattungsgemäßen Art dienen dazu, dem Bremssystem und sonstigen Druckluftverbrauchern von Nutzkraftfahrzeugen aufbereitete, das heißt insbesondere getrocknete, Druckluft zuzuführen. Die Trocknung der von einem Kompressor gelieferten Druckluft erfolgt in einer Trocknerkartusche eines Luftfilters. Da aufgrund der Luftentfeuchtung Wasser in der Trocknerkartusche zurückbleibt, ist es erforderlich, diese von Zeit zu Zeit zu regenerieren. Zu diesem Zweck wird ein zwischen dem Kompressor und der Trocknereinheit angeordnetes Ablassventil geöffnet, und es wird durch geeignete sonstige Ventilumschaltungen ermöglicht, dass Druckluft aus einem zuvor durch den Kompressor belieferten Druckluftvorratsbehälter in umgekehrter Richtung durch die Trocknereinheit strömt, um dann durch das Ablassventil in die Atmosphäre entlassen zu werden.

Da während der Regeneration keine Druckluftförderung in die Behälter erfolgen kann, ist man bestrebt, die Regenerationsphasen möglichst kurz zu halten. Andererseits ist es aber auch wichtig, die Regeneration nicht zu frühzeitig abzubrechen, damit letztlich eine ausreichende Trocknung der Filtereinheit stattfinden kann. Insgesamt ist man daher bestrebt, die optimale Druckluftmenge zum Zwecke der Regeneration durch die Trocknereinheit zu leiten.

Die DE 199 11 741 A1 und die DE 34 45 699 A1 befassen sich mit dieser Problematik.

Gemäß der DE 199 11 741 A1 wird die erforderliche Regenerationszeit auf einer theoretischen Grundlage ermittelt. Das Verfahren beruht somit auf fest eingegebenen Parametern des Kompressors, welche sich über die Lebenszeit des Kompressors und der Druckluftversorgungsanlage verändern. Es ist daher denkbar, dass eine übermäßige Feuchtigkeitsansammlung in der Luftaufbereitungsanlage und somit auch in der angeschlossenen Bremsanlage nicht frühzeitig erkannt wird.

In der DE 34 45 699 A1 ist ein Verfahren angeben, welches auf der Grundlage eines Feuchteregelkreises beruht. Das Verfahren beruht somit auf der Messgröße eines Sensors, der im Laufe seiner Lebenszeit driften kann, beispielsweise durch Kontaminationen. Somit besteht auch bei diesem System die Gefahr einer übermäßigen Wasseransammlung in den Systemen.

Das Dokument US 5,257,008 beschreibt ein Druckluftsystem mit einem Lufttrockner. Es ist ein Luftfeuchtigkeitssensor vorgesehen, der die relative Feuchtigkeit der Luft in der Lufttrockneranlage oder in dahinter angeordneten Komponenten bestimmt. Wenn ein bestimmtes Luftfeuchtigkeitniveau überschritten ist, wird ein Zeitgeber gestartet, mit dessen Hilfe festgestellt wird, ob innerhalb einer bestimmten Zeit das Luftfeuchtigkeitsniveau unter ein bestimmtes Zielniveau fällt. Ist dies nicht der Fall, wird ein Warnsignal ausgegeben, dass auf nicht länger wirksames Trocknungsmittel oder auf eine Fehlfunktion der Lufttrockneranlage hinweist.

Das Dokument US 5,103,576 beschreibt ein Verfahren zum Regenerieren eines Lufttrockners. Dazu ist ein Feuchtigkeitssensor vorgesehen, der eine Luftfeuchtigkeit in einem Reservoir bestimmt. In Abhängigkeit von dem Feuchtigkeitsniveau wird eine Regeneration des Lufttrockners durchgeführt.

Der Erfindung liegt die Aufgabe zugrunde, ein Verfahren und eine Luftaufbereitungsanlage anzugeben, die die Wahl einer optimalen Regenerationsluftmenge sicherstellen und die Gefahr einer übermäßigen Wasseransammlung im System verringern.

Diese Aufgabe wird mit den Merkmalen der unabhängigen Ansprüche gelöst.

Vorteilhafte Ausführungsformen der Erfindung sind in den abhängigen Ansprüchen angegeben.

Die Erfindung baut auf dem gattungsgemäßen Verfahren dadurch auf, dass die Anwesenheit von Kondensat in einem Bereich stromabwärts des Lufttrockners erfasst wird, dass bei Abwesenheit von Kondensat eine Regeneration mit der theoretisch erforderlichen Regenerationsluftmenge Q_{Reg,th} durchgeführt wird und dass bei Anwesenheit von Kondensat eine Regeneration mit einer korrigierten erforderlichen Regenerationsluftmenge Q_{Reg,korr} durchgeführt wird, wobei die korrigierte erforderliche Regenerationsluftmenge Q_{Reg,korr} größer ist als die theoretisch erforderliche Regenerationsluftmenge Q_{Reg,th}. Auf der Grundlage des erfindungsgemäßen Verfahrens wird somit eine Basismenge der erforderlichen Regenerationsluft theoretisch berechnet. Diese Basismenge sollte im Allgemeinen zur Regeneration ausreichen und die Regenerationsphase nicht über die Maßen ausdehnen. Wird allerdings festgestellt, dass stromabwärts des Lufttrockners Kondensat vorhanden ist, so ist davon auszugehen, dass die theoretisch errechnete Regenerationsluftmenge eventuell nicht ausreichend ist. Folglich wird mit einer korrigierten Regenerationsluftmenge gearbeitet, die größer ist als die errechnete Basismenge.

Im einfachsten Fall ist vorgesehen, dass die Regenerationsluftmengen Q_{Reg} durch Einstellen der Regenerationsdauern t_{Reg} bestimmt werden. Unter normalen Umständen hängt die Regenerationsluftmenge über eine in guter Näherung lineare Beziehung mit der Regenerationsdauer zusammen.

Gemäß einer bevorzugten Ausführungsform der Erfindung ist vorgesehen, dass die Anwesenheit von Kondensat in einem Kondensatsammelbehälter im Bereich des Druckluftvorratsbehälters erfasst wird. In einem solchen Kondensatsammelbehälter kann dann ein Kondensatsensor vorgesehen sein, der im einfachsten Fall als Schalter ausgelegt ist. Dieser Schalter wird im Falle der Anwesenheit von Kondensat betätigt, so dass ein entsprechendes Signal für eine Steuerung zur Verfügung gestellt wird.

Ebenfalls kann bevorzugt sein, dass bei Anwesenheit von Kondensat eine Regeneration mit einer korrigierten erforderlichen Regenerationsdauer t_{Reg,korr} dann durchgeführt wird, wenn die Kondensatmenge einen vorgegebenen Schwellenwert überschreitet. Es ist demnach, je nach Auslegung des erfindungsgemäßen Verfahrens, möglich, eine gewisse angefallene Kondensatmenge zuzulassen, und dennoch mit der theoretisch berechneten Regenerationsluftmenge Q_{Reg,th} zu arbeiten.

Weiterhin kann vorgesehen sein, dass die korrigierte erforderliche Regenerationsdauer t_{Reg,korr} um ein vorgegebenes Zeitintervall größer ist als die theoretisch erforderliche Regenerationsdauer t_{Reg,th}. Hierbei handelt es sich um eine einfache Möglichkeit, die korrigierte erforderliche Regenerationsdauer t_{Reg,korr} in Abhängigkeit der theoretischen Regenerationsdauer t_{Reg,th} festzulegen.

Gemäß einer weiteren Ausführungsform der Erfindung ist vorgesehen, dass die korrigierte erforderliche Regenerationsdauer t_{geg,korr} durch Multiplikation der theoretisch erforderlichen Regenerationsdauer t_{Reg,th} berechnet wird. Hierdurch erreicht man eine bezogen auf die theoretische Regenerationsdauer t_{Reg,th} relative Festlegung der korrigierten Regenerationsdauer t_{Reg,korr}.

Die Erfindung baut auf der gattungsgemäßen Luftaufbereitungsanlage dadurch auf, dass im Bereich stromabwärts des Lufttrockners ein Kondensatsensor angeordnet ist. Hierdurch werden die Vorteile und Besonderheiten des erfindungsgemäßen Verfahrens auch im Rahmen einer Luftaufbereitungsanlage realisiert.

Die Luftaufbereitungsanlage ist zur Durchführung eines erfindungsgemäßen Verfahrens vorgesehen.

Die Erfindung wird nun mit Bezug auf die begleitenden Zeichnungen anhand besonders bevorzugter Ausführungsformen beispielhaft erläutert.

Es zeigen:
- Figur 1: ein schematisches Schaltungsdiagramm einer erfin- dungsgemäßen Luftaufbereitungsanlage und
- Figur 2: ein Flussdiagramm zur Erläuterung eines erfin- dungsgemäßen Verfahrens.

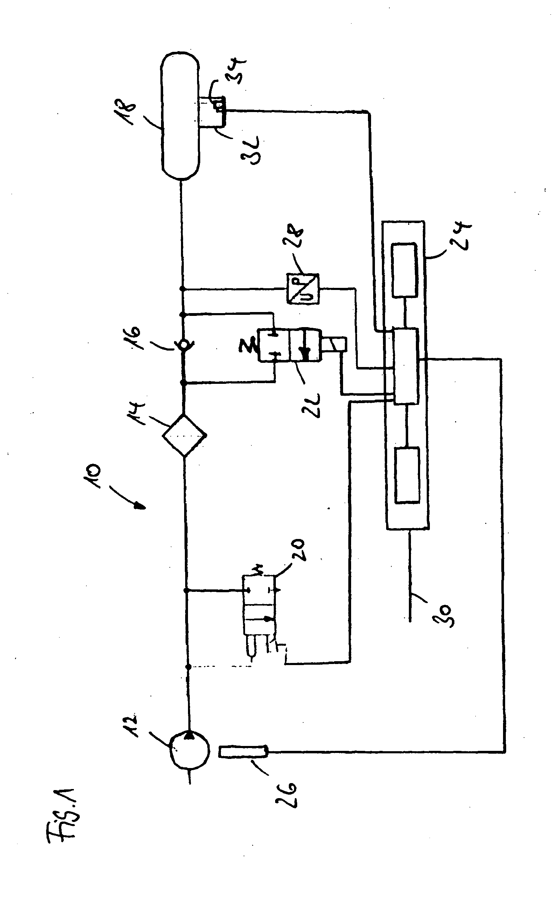

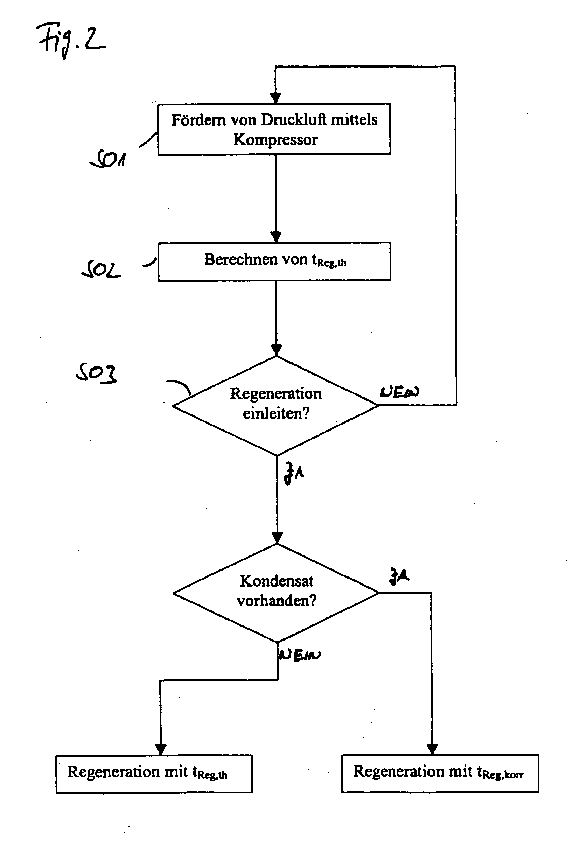

Figur 1 zeigt ein schematisches Schaltungsdiagramm einer erfindungsgemäßen Luftaufbereitungsanlage. Figur 2 zeigt ein Flussdiagramm zur Erläuterung eines erfindungsgemäßen Verfahrens. An einem Eingang der Luftaufbereitungsanlage 10 ist ein Kompressor 12 vorgesehen. Der Kompressor 12 steht über einen Lufttrockner 14 und ein Rückschlagventil 16 mit einem Druckluftvorratsbehälter 18 in Verbindung. Das Rückschlagventil 16 ist so angeordnet, dass eine Luftströmung von dem Lufttrockner 14 zum Druckluftbehälter 18 ermöglicht wird, eine Rückströmung aber unterbunden ist. Zwischen dem Kompressor 12 und dem Lufttrockner 14 ist ein Ablassventil 20 angeordnet. Weiterhin ist parallel zu dem Rückschlagventil 16 zwischen dem Lufttrockner 14 und dem Druckluftvorratsbehälter 18 ein Magnetventil 22 vorgesehen. Die Luftaufbereitungsanlage 10 umfasst weiterhin ein elektronisches Steuergerät 24, einen Drehzahlsensor 26 zum Erfassen der Drehzahl des Kompressors 12 und einen Drucksensor 28 zum Erfassen des Druckes in dem Druckluftvorratsbehälter 18. Elektrische Signale des Drehzahlsensors 26 und des Drucksensors 28 werden neben anderen Signalen, die beispielsweise auf einem CAN-Bus 30 zur Verfügung stehen, dem Steuergerät 24 zugeführt. Das Steuergerät 24 dient andererseits der Ansteuerung von Komponenten der Luftaufbereitungsanlage 10, beispielsweise des Ablassventils 20 und des das Rückschlagventil 16 umgehenden Magnetventils 22.

An dem Druckluftvorratsbehälter 18 ist weiterhin ein Kondensatsammelbehälter 32 vorgesehen, der einen Kondensatsensor 34 aufweist. Ein Ausgangssignal dieses Kondensatsensors 34 wird ebenfalls der elektronischen Steuerung 24 zur Verfügung gestellt.

Die erfindungsgemäße Luftaufbereitungsanlage 10 arbeitet wie folgt. Während des Förderbetriebs wird von dem Kompressor 12 Druckluft über den Lufttrockner 14 und das Rückschlagventil 16 in den Druckluftvorratsbehälter 18 gefördert. (Schritt S01 in Figur 2). In dieser Förderphase kann kontinuierlich die theoretische Regenerationszeit mittels des Steuergerätes 24 ermittelt werden, wobei als Eingangsinformation insbesondere die durch den Drehzahlsensor 26 erfasste Kompressordrehzahl zur Verfügung steht. Nähere Ausführungen zu dem Berechnungsverfahren sind der DE 199 11 741 A1 entnehmbar, deren Offenbarung im Hinblick darauf vollständig in die vorliegende Offenbarung aufgenommen wird. Während der Förderphase befinden sich das Ablassventil 20 und das Magnetventil 22 in ihren dargestellten Stellungen, das heißt beide Ventile sind geschlossen. Soll nun eine Regeneration eingeleitet werden (Schritt S03 in Figur 2), so wird das Ablassventil 20 durch ein elektrisches Signal der Steuerung 24 geöffnet, wobei zur Öffnung des Ablassventils 20 ebenfalls Druckluft vom Kompressor 12 zur Verfügung steht. Ebenfalls wird das Magnetventil 22 geöffnet. Folglich kann Luft aus dem Druckluftbehälter 18 über das Magnetventil 22 und den Lufttrockner 14 über das Ablassventil 20 in die Atmosphäre entweichen und dabei den Lufttrockner 14 regenerieren.

Zu Beginn der Regenerationszeit wird im Hinblick auf deren Dauer geprüft, ob in dem Kondensatsammelbehälter 32 Kondensat vorhanden ist (Schritt S04 in Figur 2). Ist kein Kondensat vorhanden oder liegt Kondensat nur in geringer Menge vor, so findet die Regeneration mit der theoretischen Regenerationsdauer t_{Reg,th} statt. Im anderen Fall, das heißt es liegt Kondensat vor beziehungsweise es liegt eine übermäßige Menge an Kondensat vor, wird mit der korrigierten Regenerationszeit t_{Reg,korr} gearbeitet, wobei letztere durch einfache arithmetische Operationen aus der theoretischen Regenerationszeit t_{Reg,th} berechnet werden kann, beispielsweise durch Addition oder Multiplikation. Ebenfalls ist es denkbar, dass die korrigierte Regenerationszeit eine feste vorbestimmte Regenerationszeit mit großer Dauer ist.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

- 10: Luftaufbereitungsanlage
- 12: Kompressor
- 14: Lufttrockner
- 16: Rückschlagventil
- 18: Druckluftvorratsbehälter
- 20: Ablassventil
- 22: Magnetventil
- 24: Steuergerät
- 26: Drehzahlsensor
- 28: Drucksensor
- 30: CAN-Bus
- 32: Kondensatsammelbehälter
- 34: Kondensatsensor

## Patentansprüche

1. Verfahren zur Luftaufbereitung, insbesondere für pneumatische Bremsanlagen von Nutzfahrzeugen, mit den Schritten:
- Fördern von Druckluft zu einem Druckluftvorratsbehälter (18) durch einen Lufttrockner (14),
- Einleiten einer Regeneration des Lufttrockners, indem Regenerationsluft aus dem Druckluftvorratsbehälter durch den Lufttrockner geleitet und von dort über ein Ablassventil (20) abgelassen wird, und
- Berechnen der theoretisch erforderlichen Regenerationsluftmenge Q_{Reg,th},
**dadurch gekennzeichnet,**
- **dass** die Anwesenheit von Kondensat in einem Bereich stromabwärts des Lufttrockners (14) erfasst wird,
- **dass** bei Abwesenheit von Kondensat eine Regeneration mit der theoretisch erforderlichen Regenerationsluftmenge Q_{Reg,th} durchgeführt wird und
- **dass** bei Anwesenheit von Kondensat eine Regeneration mit einer korrigierten erforderlichen Regenerationsluftmenge Q_{Reg,korr} durchgeführt wird, wobei die korrigierte erforderliche Regenerationsluftmenge Q_{Reg,korr} größer ist als die theoretisch erforderliche Regenerationsluftmenge Q_{Reg,th}.

2. Verfahren nach Anspruch 1, **dadurch gekennzeichnet, dass** die Regenerationsluftmengen 4_{Reg} durch Einstellen der Regenerationsdauern t_{Reg} bestimmt werden.

3. Verfahren nach Anspruch 1 oder 2, **dadurch gekennzeichnet, dass** die Anwesenheit von Kondensat in einem Kondensatsammelbehälter (32) im Bereich des Druckluftvorratsbehälters (18) erfasst wird.

4. Verfahren nach Anspruch 2 oder 3, **dadurch gekennzeichnet, dass** bei Anwesenheit von Kondensat eine Regeneration mit einer korrigierten erforderlichen Regenerationsdauer t_{Reg,korr} dann durchgeführt wird, wenn die Kondensatmenge einen vorgegebenen Schwellenwert überschreitet.

5. Verfahren nach Anspruch 2 bis 4, **dadurch gekennzeichnet, dass** die korrigierte erforderliche Regenerationsdauer t_{Reg.korr} um ein vorgegebenes Zeitintervall größer ist als die theoretisch erforderliche Regenerationsdauer t_{Reg,th}.

6. Verfahren nach Anspruch 2 bis 4, **dadurch gekennzeichnet, dass** die korrigierte erforderliche Regenerationsdauer t_{Reg,korr} durch Multiplikation der theoretisch erforderlichen Regenerationsdauer t_{Reg,th} berechnet wird.

7. Luftaufbereitungsanlage für pneumatische Bremsanlagen von Nutzfahrzeugen, mit einer Druckluftquelle (12), einem Lufttrockner (14), einem Druckluftbehälter (18), einem Ablassventil (20) und einem Regenerationsventil (22), wobei im Bereich stromabwärts des Lufttrockners (14) ein Kondensatsensor (34) angeordnet ist, **dadurch gekennzeichnet, dass** die Luftaufbereitungsanlage zur Durchführung eines Verfahrens nach einem der Ansprüche 1 bis 6 eingerichtet ist.

## Claims

1. Method for the treatment of air, in particular for pneumatic brake systems of utility vehicles, having the steps:
- feeding compressed air to a compressed air storage tank (18) through an air dryer (14),
- initiating a regeneration of the air dryer by virtue of regeneration air from the compressed air storage tank being conducted through the air dryer and discharged from there via a discharge valve (20), and
- calculating the theoretically required regeneration air quantity Q_{Reg,th},
**characterized**
- **in that** the presence of condensate in a region downstream of the air dryer (14) is detected,
- **in that**, in the absence of condensate, a regeneration is carried out with the theoretically required regeneration air quantity Q_{Reg,th}, and
- **in that**, in the presence of condensate, a regeneration is carried out with a corrected required regeneration air quantity Q_{Reg,corr}, with the corrected required regeneration air quantity Q_{Reg,corr} being greater than the theoretically required regeneration air quantity Q_{Reg,th}.

2. Method according to Claim 1, **characterized in that** the regeneration air quantities Q_{Reg} are determined by setting the regeneration durations t_{Reg}.

3. Method according to Claim 1 or 2, **characterized in that** the presence of condensate in a condensate collecting tank (32) in the region of the compressed air storage tank (18) is detected.

4. Method according to Claim 2 or 3, **characterized in that,** in the presence of condensate, a regeneration is carried out with a corrected required regeneration duration t_{Reg,corr} when the condensate quantity exceeds a predefined threshold value.

5. Method according to Claim 2 to 4, **characterized in that** the corrected required regeneration duration t_{Reg,corr} is greater by a predefined time interval than the theoretically required regeneration duration t_{Reg,th}.

6. Method according to Claim 2 to 4, **characterized in that** the corrected required regeneration duration t_{Reg,corr} is calculated by means of multiplication of the theoretically required regeneration duration t_{Reg,th}.

7. Air treatment system for pneumatic brake systems of utility vehicles, having a compressed air source (12), an air dryer (14), a compressed air tank (18), a discharge valve (20) and a regeneration valve (22), wherein a condensate sensor (34) is arranged in the region downstream of the air dryer (14), **characterized in that** the air treatment system is set up for carrying out a method according to one of Claims 1 to 6.

## Revendications

1. Procédé de traitement de l'air, notamment pour des installations pneumatiques de freinage de véhicules utilitaires, comprenant les stades dans lesquels :
- on envoie de l'air comprimé à un réservoir (18) d'air comprimé en passant par un sécheur (14) d'air,
- on lance une régénération du sécheur d'air en envoyant de l'air de régénération provenant du réservoir d'air comprimé dans le sécheur d'air et en l'en évacuant par une vanne (20) d'évacuation, et
- on calcule la quantité Q_{Reg.th} d'air de régénération nécessaire théoriquement,
**caractérisé,**
- **en ce que** l'on détecte la présence de produits condensés dans une zone en aval du sécheur (14) d'air,
- **en ce que**, en absence de produits condensés, on effectue une régénération par la quantité Q_{Reg.th} d'air de régénération nécessaire théoriquement et
- **en ce que** en présence de produits condensés, on effectue une régénération par une quantité Q_{Reg.korr}, d'air de régénération nécessaire corrigée, la quantité Q_{Reg.korr} d'air de régénération nécessaire corrigée étant plus grande que la quantité Q_{Reg.th} d'air de régénération nécessaire théoriquement.

2. Procédé suivant la revendication 1, **caractérisé en ce que** l'on détermine les quantités Q_{Reg} d'air de régénération en réglant les durées t_{Reg} de régénération.

3. Procédé suivant l'une des revendications 1 ou 2, en ce que l'on détecte la présence de produits condensés dans un collecteur (32) de produits condensés dans la zone du réservoir (18) d'air comprimé.

4. Procédé suivant la revendication 2 ou 3, **caractérisé en ce que** en présence de produits condensés, on effectue une régénération en ayant une durée t_{Reg,korr} de régénération nécessaire corrigée, lorsque la quantité de produits condensés dépasse une valeur de seuil prescrite.

5. Procédé suivant la revendication 2 à 4, **caractérisé en ce que** la durée t_{Reg,korr} de régénération nécessaire corrigée est plus grande d'un intervalle de temps prescrit que la durée t_{Reg.th} de régénération nécessaire théoriquement.

6. Procédé suivant la revendication 2 à 4, **caractérisé en ce que** l'on calcule la durée t_{Reg, korr} de régénération nécessaire corrigée en multipliant la durée t_{Reg.th} de régénération nécessaire théoriquement.

7. Installation de traitement de l'air pour des installations automatiques de freinage de véhicules utilitaires comprenant une source (12) d'air comprimé, un sécheur (14) d'air, un récipient (18) d'air comprimé, une vanne (20) d'évacuation et une vanne (22) de régénération, dans laquelle un capteur (24) de produits condensés est disposé en aval du sécheur (14) d'air, **caractérisée en ce** l'installation traitement d'air est conçue pour effectuer un procédé suivant l'une des revendications 1 à 6.
